# EUROPEAN PATENT APPLICATION

(11) **EP 4 467 375 A1**
(43) Date of publication of application: **27.11.2024**
(21) Application number: 23174557.1
(22) Date of filing: 22.05.2023
(51) Int. Cl.: B60K 35/00, H04N 9/31

(54) **WIRELESS PROJECTION MAPPING SYSTEM AND METHOD OF USING THE SAME**

(71) Applicant: Bayerische Motoren Werke Aktiengesellschaft, 80809 München (DE)
(72) Inventor: Eichhorn, Julian, 21682 Stade (DE)

(57) **Abstract**

A wireless projection mapping device and a method of using the same. A wireless projection mapping device includes a wireless modem configured to communicate wirelessly with a vehicle headunit installed in a vehicle, a video projector configured to project an image on a projection surface, a sensor configured to detect a user signal from a user in response to the projected image, and processing circuitry configured to control the video projector to project the image, determine a user input from the user based on the detected user signal, and perform an action based on the user input. The wireless projection mapping device is a wearable device. The processing circuitry may send a control signal to the vehicle headunit via the wireless modem based on the user input to control light setting, a seat position of a seat, climate and comfort setting, an in-vehicle communication system, or an in-vehicle navigation system.

## Description

### Field

Examples relate to projection-based user interface, more particularly a wireless projection mapping system in a vehicle.

### Background

A user interface plays an important role in communicating with a device. A driver or a passenger of a vehicle controls and interacts with a vehicle. A projection-based user interface may be used in a vehicle to better communicate with a vehicle control system. A projection-based user interface can allow the user to remotely control the vehicle (such as climate control, etc.) through the movement of fingertips over a projected surface.

### Summary

An example relates to a wireless projection mapping device. A wireless projection mapping device includes a wireless modem configured to communicate wirelessly with a vehicle headunit installed in a vehicle, a video projector configured to project an image on a projection surface, a sensor configured to detect a user signal from a user in response to the projected image, and processing circuitry configured to control the video projector to project the image, determine a user input from the user based on the detected user signal, and perform an action based on the user input.

In one example, the wireless projection mapping device is a wearable device. The processing circuitry may be configured to send a control signal to the vehicle headunit via the wireless modem based on the user input to control at least one of light setting in the vehicle, a seat position of a seat in the vehicle, climate and comfort setting in the vehicle, an in-vehicle communication system, or an in-vehicle navigation system. The processing circuitry may be configured to receive an instruction from the vehicle headunit and control the video projector to project the image based on the instruction. The image may be one of a user interface image, an illumination, or images for visual effects. The sensor may be a camera, a microphone, or an accelerometer.

In some examples, the wireless projection mapping device may be attached to an object inside the vehicle. In some examples, the wireless projection mapping device may further include a display screen.

Another example relates to a vehicle headunit installed in a vehicle. The vehicle headunit includes a wireless modem configured to communicate wirelessly with a wireless projection mapping device, and processing circuitry configured to receive a control signal from the wireless projection mapping device and control the vehicle based on the control signal. The processing circuitry may be configured to control at least one of light setting in the vehicle, a seat position of a seat in the vehicle, climate and comfort setting in the vehicle, an in-vehicle communication system, or an in-vehicle navigation system based on the control signal from the wireless projection mapping device.

In some examples, the processing circuitry may be configured to receive a user input further from an in-vehicle user interface and control the vehicle based on the user input received from the in-vehicle user interface. In some examples, the processing circuitry may be configured to determine whether a user of the wireless projection mapping device is driving the vehicle above a pre-configured autonomous driving level or the vehicle is stopped or parked, and control the vehicle based on the control signal received from the wireless projection mapping device if it is determined that the user of the wireless projection mapping device is driving the vehicle above the pre-configured autonomous driving level or the vehicle is stopped or parked, otherwise control the vehicle based only on the user input from the in-vehicle interface.

In some examples, the processing circuitry may be configured to send an instruction to the wireless projection mapping device to control a video projector of the wireless projection mapping device to project an image location-stabilized on a projection surface in a vehicle or on a body part, like a hand. The image may be one of a user interface image, an illumination, or images for visual effects.

Another example relates to a method for wireless projection mapping. The method includes projecting, by a wireless projection mapping device, an image on a projection surface, detecting, by a sensor, a user signal from a user in response to the projected image, determining a user input from the user based on the detected user signal, and performing an action based on the user input. In examples, performing the action may include sending a control signal to a vehicle headunit installed in a vehicle via a wireless modem based on the user input. The control signal may be sent to control at least one of light setting in the vehicle, a seat position of a seat in the vehicle, climate and comfort setting in the vehicle, an in-vehicle communication system, or an in-vehicle navigation system.

In some examples, the method may optionally include receiving an instruction from the vehicle headunit and controlling the wireless projection mapping device to project the image based on the instruction. The image may be one of a user interface image, an illumination, or images for visual effects.

Another example relates to a method implemented by a vehicle headunit installed in a vehicle. The method includes receiving a control signal wirelessly from a wireless projection mapping device, and controlling a vehicle based on the control signal. In examples, at least one of light setting in the vehicle, a seat position of any seat in the vehicle, climate and comfort setting in the vehicle, an in-vehicle communication system, or an in-vehicle navigation system is controlled based on the control signal from the wireless projection mapping device.

In some examples, the method may optionally further include receiving a user input from an in-vehicle user interface, and controlling the vehicle based on the user input received from the in-vehicle user interface. In some examples, it may be determined whether a user of the wireless projection mapping device is driving the vehicle above a pre-configured autonomous driving level or the vehicle is stopped or parked, and the vehicle is controlled based on a control signal received from the wireless projection mapping device if it is determined that the user of the wireless projection mapping device is driving the vehicle above the pre-configured autonomous driving level or the vehicle is stopped or parked, otherwise the vehicle is controlled based only on the user input from the in-vehicle interface.

The method may further include sending an instruction to the wireless projection mapping device to control the wireless projection mapping device to project an image on a projection surface. The image may be one of a user interface image, an illumination, or images for visual effects.

Another example relates to a machine-readable medium including code, when executed, to cause a machine to perform any method disclosed above.

### Brief description of the Figures

Some examples of apparatuses and/or methods will be described in the following by way of example only, and with reference to the accompanying figures, in which
FIG. 1 shows an example scenario that a wireless projection mapping device is used by a user(s) in a vehicle;
FIG. 2 shows an example system for wireless projection mapping in a vehicle;
FIG. 3 is a flow diagram of an example process for wireless projection mapping; and
FIG. 4 is a flow diagram of an example method for controlling a vehicle using wireless projection mapping.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples for providing projection-based user interface (UI) using a wireless projection mapping system will be explained hereafter. In examples, a wireless projection mapping device is used to provide a UI for a user(s), for example a driver or a passenger of a vehicle. In examples, a small battery-operated wireless projection mapping device that may be attached to the user or another object in a vehicle surface may be used to provide a projection-based UI.

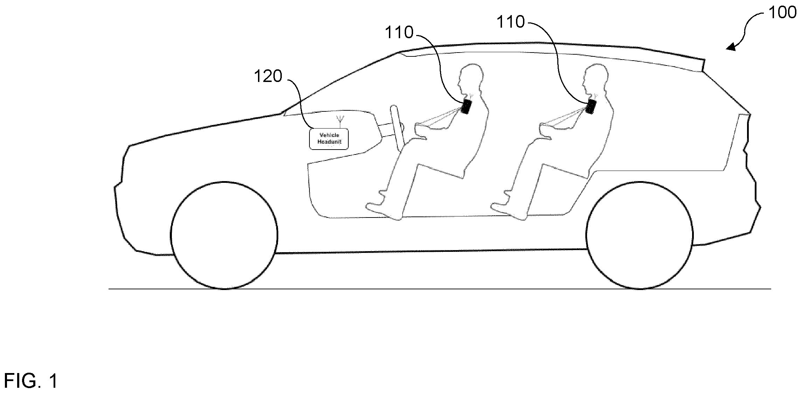

FIG. 1 shows an example scenario that a wireless projection mapping device 110 is used by a user(s) in a vehicle 100. The user of the wireless projection mapping device 110 may be a driver and/or a passenger of the vehicle 100. The vehicle 100 may be any type of machine for transportation including, but not limited to, a car, a truck, a bus, a sport utility vehicle, a recreation vehicle, a motorcycle, an airplane, a vertical take-off and landing (VTOL) aircraft, a train or the like.

A wireless projection mapping device 110 is configured to project a light beam toward a projection surface, track movements of a hand, finger (fingertip), or any object held by the user around the projection surface, and detect a user's gesture (e.g., tapping, clicking, swiping, rotating, tilting, translating, etc.) or a signal (e.g., a voice instruction, etc.) from the user for providing a projection-based UI. The wireless projection mapping device 110 projects an image onto a projection surface and interacts with the user by detecting the user's gesture or other user signal in response to the projected image. The projection surface may be any surface in the vehicle interior (e.g., a surface of a steering wheel, glove box, door panel, etc.) or on a body part of the user (e.g., a hand, palm, wrist, leg, or chest of the user, etc.). The passengers/users of the vehicle 100 can interact with the vehicle 100 via the projected UI to control vehicle settings or view information, etc.

The wireless projection mapping device 110 may be a mobile/portable device. The wireless projection mapping device 110 may be attached to a user (e.g., attached to the clothes of the user). For example, the wireless projection mapping device 110 may be a wearable device by a user. The wireless projection mapping device 110 may be attached to another object in a vehicle. For example, the wireless projection mapping device 110 may be attached to, or installed on, a ceiling, a seat, or any other object in the vehicle. Alternatively, the wireless projection mapping device 110 may be a fixed device installed inside a vehicle 100, such as on a ceiling of the vehicle, etc.

The wireless projection mapping device 110 may be battery-operated. The wireless projection mapping device 110 may optionally include a display screen. For example, the wireless projection mapping device 110 may be a smart phone/mobile phone (or any mobile device) with a video projector.

The vehicle 100 includes a vehicle headunit 120. The vehicle headunit 220 is a control unit/controller for the vehicle. The vehicle headunit 120 communicates with the wireless projection mapping device(s) 110 wirelessly. The vehicle headunit 120 may communicate with the wireless projection mapping device 110 via any wireless communication protocol, such as Bluetooth, IEEE wireless local area network (WLAN) protocol, a macro-area wireless communication protocol such as Third Generation (3G), Fourth Generation (4G), Fifth Generation (5G), Sixth Generation (6G), or beyond, etc.

The vehicle headunit 120 may control or adjust the vehicle settings based on a control signal received from the wireless projection mapping device 110. A user of the vehicle may set or adjust vehicle settings via the wireless projection mapping device 110 or via a separate in-vehicle interface (not shown in FIG. 1). The settings that can be controlled by the vehicle headunit 120 may be light setting in the vehicle, a seat position of any seat in the vehicle, climate and comfort setting in the vehicle, an in-vehicle communication system, or an in-vehicle navigation system, or the like. The vehicle headunit 120 may also provide a wireless access to vehicle data and/or vehicle data control through application programming interfaces (APIs). A user may access or control vehicle data via the wireless projection mapping device 210 which communicates with the vehicle headunit 220.

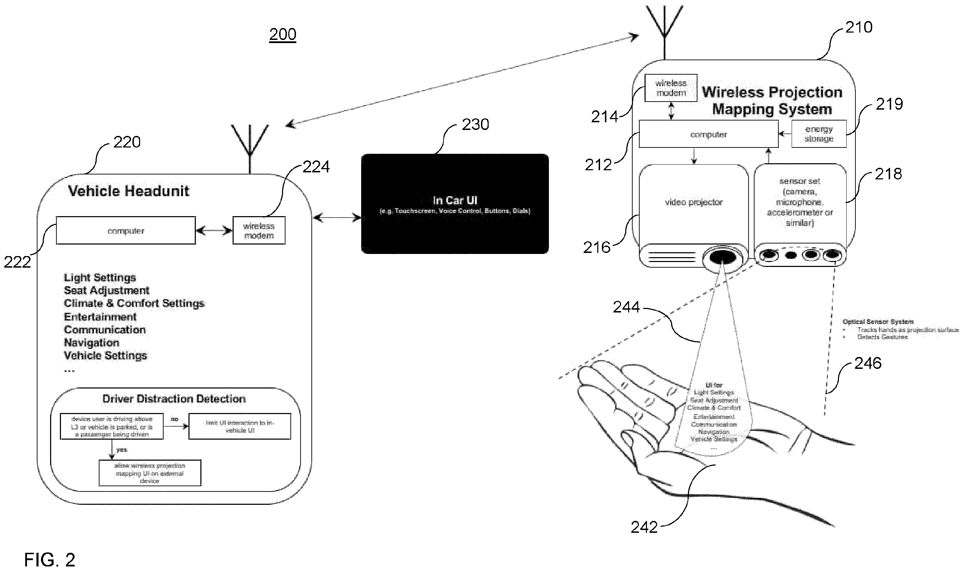

FIG. 2 shows an example system for wireless projection mapping in a vehicle. The system 200 includes a wireless projection mapping device 210 and a vehicle headunit 220. The system 200 may additionally include a separate in-vehicle UI 230.

The wireless projection mapping device 210 includes a processing circuitry 212 (e.g., a computer), a wireless modem 214, a video projector 216, a sensor 218, and a battery 219 (i.e., an energy storage).

The wireless modem 214 is configured to communicate wirelessly with a vehicle headunit 220 installed in a vehicle. The wireless modem 214 may be configured to communicate under any short- or long-range wireless communication protocol including, but not limited to, Bluetooth, IEEE WLAN protocol, a macro-area wireless communication protocol such as 3G, 4G, 5G, 6G, or beyond, etc.

The video projector 216 is configured to project a light beam 244 toward a projection surface 242. The video projector 216 is configured to project an image on a projection surface 242, for example based on a control signal/data from the vehicle headunit 220. FIG. 2 shows a palm of the user as an example of the projection surface 242. However, the projection surface 242 may be any surface inside a vehicle or a body part of the user. The video projector 216 may be used to display UI components or operational information on a projection surface 242. Any conventional projector (e.g., a liquid crystal display (LCD) projector, etc.) may be used to project an image. The video projector 216 is controlled by the processing circuitry 212 to project an image on the projection surface 242. For example, the processing circuitry 212 may project an image of UI components (e.g., menu and/or sub-menu items to be selected by the user). Alternatively, the image projected by the video projector 215 may be images for information, an illumination for the vehicle, images for visual effects, images for in-vehicle games using projection, or the like. In examples, the UI components or the image to be projected by the video projector 216 may be provided by the vehicle headunit 220 via the wireless modem 214.

The UI components projected by the wireless projection mapping device 210 may be for controlling light setting in the vehicle (e.g., turning on/off any light or adjusting the intensity of the light in the vehicle, etc.), seat adjustments for any seat in the vehicle (e.g., adjusting seat height, reclining, leg room of any seat, etc.), climate and comfort control in the vehicle (e.g., temperature setting, turning on/off heated/cooled seat, etc.), entertainment control in the vehicle (e.g., turning on/off in-vehicle entertainment system, changing a channel, volume control, etc.), communication control in the vehicle (e.g., making or receiving a call via the a vehicle-assisted communication system in a vehicle, adjusting volume, etc.), navigation control in the vehicle (e.g., setting or changing a navigation system setting, etc.), providing a vehicle locking/unlocking UI to the user, providing energy state of charge (SOC) level information of a battery, controlling any vehicle setting, or the like.

The sensor 218 is configured to detect a user signal. The user may respond to the projected image (e.g., UI components) and the sensor 218 may capture the user signal that is made in response to the projected image. The sensor 218 may include at least one of a camera, a microphone, an accelerometer, or the like.

In case of a visual sensor (i.e., camera), the sensor 218 may capture the user's gesture in the field of view 246 of the camera that is provided by the user in response to the projected image. The video projector 216 and the camera may be aligned each other such that the field of view 246 of the camera may cover the projection surface 242 onto which the video projector 216 projects the image. A gesture detection module running on the processing circuitry 212 may determine the user's gesture from the images captured by the camera. The movements of the hands or fingers (fingertips) of the user or a device held by the user such as a pen/stylus may be tracked to determine the user's gesture such as tapping, clicking, or swiping, etc. The user's input may then be determined by the processing circuitry 212 based on the detected user's gesture. The gesture may be a one-hand gesture or a two-hand gesture that include simple taps, swipes, rotating, tilting, translating, and so on. The gesture may be given either by hand or using a certain device such as an infra-red pen/stylus. Any conventional methods for real-time fingertips detection and fingertips tracking may be implemented. The fingertips detection may be accomplished by applying computer vision techniques to the images captured by a camera. In addition, a gesture recognition model may be used to enable a mapping from the position of fingertips to the high-level user actions and events, so that several gestures (e.g., tapping, clicking, swiping, dragging, etc.) may be correctly detected.

In case of audio sensor (i.e., microphone), the sensor 218 may capture the user's voice signal provided by the user in response to the projected image. A voice recognition module may be run on the processing circuitry 212 to determine a user's voice instruction based on the user's voice signal captured by the sensor (microphone).

In case of accelerometer, the sensor 218 may detect a movement or vibration incurred by the user in response to the projected image and the processing circuitry 212 may determine the user's input based on the movement or vibration signal captured by the accelerometer.

Upon detection of the user's input, the processing circuitry 212 may perform an action accordingly. For example, the processing circuitry 212 may generate and display a sub-menu (depending on the menu item selected by the user) or send a control signal to the vehicle headunit 220 via the wireless modem 214 based on the determined user's input, or the like.

The vehicle headunit 220 is a device that can control vehicle settings or provide an access to vehicle data and/or vehicle data control through APIs. The vehicle headunit 220 includes a processing circuitry 222 (e.g., a computer) and a wireless modem 224. The vehicle headunit 220 may communicate with the wireless projection mapping device(s) 210 wirelessly via the wireless modem 224. The wireless modem 224 may communicate with the wireless projection mapping device 210 via any wireless communication protocol, such as Bluetooth, IEEE WLAN protocol, a macro-area wireless communication protocol such as 3G, 4G, 5G, 6G, or beyond, etc.

The processing circuitry 222 may receive a control signal from the wireless projection mapping device 210 and control the vehicle setting based on the control signal. The control signal may be to control at least one of light setting in the vehicle, a seat position of any seat in the vehicle, climate and comfort setting in the vehicle, an in-vehicle communication system, or an in-vehicle navigation system.

The processing circuitry 222 may send an instruction/control signal to the wireless projection mapping device 210 to control a video projector 216 of the wireless projection mapping device 210 to project an image on a projection surface. In some examples, the processing circuitry 222 may provide an image(s) to be displayed/projected by the wireless projection mapping device 210 via the instruction. The processing circuitry 222 may provide vehicle data in response to the request from the user via the wireless projection mapping device 210 or allow controlling the vehicle data via the wireless projection mapping device 210.

The processing circuitry 222 may send the instruction to the wireless projection mapping device 210 to project an illumination or images for visual effects such as displaying a welcome sign displayed when the user opens a door of the vehicle or displaying certain contents in the vehicle, projecting an illumination for enhancing a mood or highlighting or drawing a user's attention, displaying images for video games in the vehicle, etc.

A separate in-vehicle UI 230 may be provided in the vehicle. The in-vehicle UI 230 may be a touchscreen, a voice control system, buttons and/or dials installed in the vehicle, etc. The user of the vehicle may control vehicle settings using the in-vehicle UI 230. For example, the user of the vehicle may control vehicle functions (such as turning on/off or controlling a climate control system, navigation settings, an in-vehicle entertainment system, etc.) by using the in-vehicle UI 230 such as operating via a touchscreen, a voice control system, buttons and/or dials installed in the vehicle. The processing circuitry 222 may also receive a user input via the in-vehicle UI 230 and control the vehicle functions based on the user input received via the in-vehicle UI 230.

In some examples, the vehicle headunit 220 may limit the use of the wireless projection mapping device 210 to a situation that the driver is not distracted, or the driver distraction is not an issue. For example, the processing circuitry 222 may be configured to determine whether a user of the wireless projection mapping device 210 is driving the vehicle above a pre-determined autonomous driving level (e.g., autonomous driving level 3) or the vehicle is stopped or parked. The Society of Automotive Engineers (SAE) defines 6 levels of driving automation ranging from Level 0 (fully manual) to Level 5 (fully autonomous). One of the SAE autonomous driving level may be pre-configured for allowing interaction with the user via the wireless projection mapping device 210. The processing circuitry 222 may allow the interaction via the wireless projection mapping UI on the external device (i.e., the wireless projection mapping device 210) if it is determined that the user of the wireless projection mapping device 210 is driving the vehicle above the pre-configured autonomous driving level (e.g., autonomous driving level 3) or the vehicle is stopped or parked. The processing circuitry 222 may limit the UI interaction to the in-vehicle UI 230 and disallow interaction via the wireless projection mapping device 210 if it is determined that the user of the wireless projection mapping device 210 is driving the vehicle below or on the pre-configured autonomous driving level (e.g., autonomous driving level 3).

The wireless projection mapping device may be used for any purposes other than proving a projection-based UI. For example, the wireless projection mapping device 110/210 may be used to project a content in an area of view of the user. For example, the wireless projection mapping device 110/210 may be used to illuminate an interior of the vehicle with a mood lighting (i.e., any lighting that can enhance the atmosphere in the vehicle) when a driver/passenger enters a vehicle. The illumination may include a text and/or an image for welcoming the driver/passenger. In some examples, the wireless projection mapping device 110/210 may be used to provide a warning signal to a driver of the vehicle regarding a pedestrian, a biker, a car, or the like passing by or approaching toward the vehicle, or any dangerous situation nearby or in front of the vehicle. For example, the vehicle may include proximity sensors and/or camera-based monitoring systems to detect pedestrians, bikers, cars, or any other objects nearby, or a camera-based system to detect a dangerous situation nearby or in front of the vehicle (e.g., existence of a pothole or an accident in front). Upon detection of the passengers, bikers, or cars, etc. or any dangerous situation, the vehicle headunit 120/220 may send a signal to the wireless projection mapping device 110/210 to provide an alarm signal to a driver or passenger of the vehicle using the projection of an image. In some examples, the wireless projection mapping device 110/210 may be used for gamification.

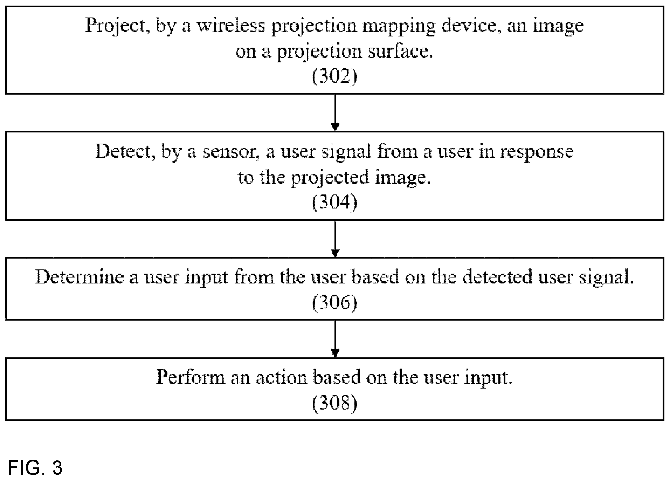

FIG. 3 is a flow diagram of an example process for wireless projection mapping. An image is projected by a wireless projection mapping device on a projection surface (302). A user signal from a user in response to the projected image is detected by a sensor (304). An input from the user is determined based on the detected user signal (306). An appropriate action is then performed based on the user input (308). For example, a control signal may be sent to a vehicle headunit installed in a vehicle via a wireless modem based on the input. The control signal may be sent to control at least one of light setting in the vehicle, a seat position of any seat in the vehicle, climate and comfort setting in the vehicle, an in-vehicle communication system, or an in-vehicle navigation system, etc.

The method may further include receiving an instruction from the vehicle headunit and controlling the wireless projection mapping device to project the image based on the instruction. The image is one of a user interface image, an illumination, or images for visual effects.

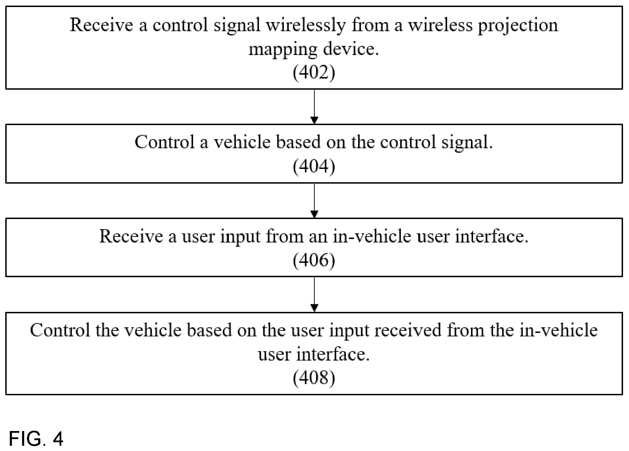

FIG. 4 is a flow diagram of an example method for controlling a vehicle using wireless projection mapping. A control signal is received by a vehicle headunit wirelessly from a wireless projection mapping device (402). The vehicle headunit then controls a vehicle based on the control signal (404). At least one of light setting in the vehicle, a seat position of any seat in the vehicle, climate and comfort setting in the vehicle, an in-vehicle communication system, or an in-vehicle navigation system may be controlled based on the control signal received from the wireless projection mapping device.

The method may optionally further include receiving a user input from an in-vehicle user interface (406) and controlling the vehicle based on the user input received from the in-vehicle user interface (408). In some example, it may be determined whether a user of the wireless projection mapping device is driving the vehicle above a pre-configured autonomous driving level (e.g., Autonomous Driving Level 3) or the vehicle is stopped or parked, and interaction via the wireless projection mapping device may be allowed if it is determined that the user of the wireless projection mapping device is driving the vehicle above the pre-configured autonomous driving level or the vehicle is stopped or parked, otherwise the vehicle is controlled based only on the user input from the in-vehicle interface (i.e., interaction via the wireless projection mapping device is disallowed).

The method may optionally further include sending an instruction to the wireless projection mapping device to control the wireless projection mapping device to project an image on a projection surface. The image is one of a user interface image, an illumination, or images for visual effects.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A wireless projection mapping device (210), comprising:
a wireless modem (214) configured to communicate wirelessly with a vehicle headunit (220) installed in a vehicle;
a video projector (216) configured to project an image on a projection surface;
a sensor (218) configured to detect a user signal from a user in response to the projected image; and
processing circuitry (212) configured to control the video projector (216) to project the image, determine a user input from the user based on the detected user signal, and perform an action based on the user input.

2. The wireless projection mapping device (210) of claim 1, wherein the wireless projection mapping device (210) is a wearable device.

3. The wireless projection mapping device (210) as in any one of claims 1-2, wherein the processing circuitry (212) is configured to send a control signal to the vehicle headunit (220) via the wireless modem (214) based on the user input to control at least one of light setting in the vehicle, a seat position of a seat in the vehicle, climate and comfort setting in the vehicle, an in-vehicle communication system, or an in-vehicle navigation system, or to provide a locking/unlocking user interface to the user, or to provide energy state of charge (SOC) level information.

4. The wireless projection mapping device (210) as in any one of claims 1-3, wherein the processing circuitry (212) is configured to receive an instruction from the vehicle headunit (220) and control the video projector (216) to project the image based on the instruction.

5. The wireless projection mapping device (210) as in any one of claims 1-4, wherein the image is one of a user interface image, an illumination, or images for visual effects.

6. The wireless projection mapping device (210) as in any one of claims 1-5, wherein the sensor (218) is a camera, a microphone, or an accelerometer.

7. The wireless projection mapping device (210) as in any one of claims 1-6, wherein the wireless projection mapping device is attached to an object inside the vehicle.

8. The wireless projection mapping device (210) as in any one of claims 1-7, further comprising a display screen.

9. A vehicle headunit (220) installed in a vehicle, comprising:
a wireless modem (224) configured to communicate wirelessly with a wireless projection mapping device; and
processing circuitry (222) configured to receive a control signal from the wireless projection mapping device (210) and control the vehicle based on the control signal.

10. The vehicle headunit (220) of claim 9, wherein the processing circuitry (222) is configured to control at least one of light setting in the vehicle, a seat position of a seat in the vehicle, climate and comfort setting in the vehicle, an in-vehicle communication system, an in-vehicle navigation system, or a vehicle locking/unlocking system, or to provide energy state of charge (SOC) level information of a battery based on the control signal from the wireless projection mapping device.

11. The vehicle headunit (220) as in any one of claims 9-10, wherein the processing circuitry (222) is configured to receive a user input further from an in-vehicle user interface and control the vehicle based on the user input received from the in-vehicle user interface.

12. The vehicle headunit (220) of claim 11, wherein the processing circuitry (222) is configured to determine whether a user of the wireless projection mapping device (210) is driving the vehicle above a pre-configured autonomous driving level or the vehicle is stopped or parked, and control the vehicle based on the control signal received from the wireless projection mapping device (210) if it is determined that the user of the wireless projection mapping device (210) is driving the vehicle above the pre-configured autonomous driving level or the vehicle is stopped or parked, otherwise control the vehicle based only on the user input from the in-vehicle interface.

13. The vehicle headunit (220) as in any one of claims 9-12, wherein the processing circuitry (222) is configured to send an instruction to the wireless projection mapping device (210) to control a video projector of the wireless projection mapping device (210) to project an image on a projection surface.

14. The vehicle headunit (220) of claim 13, wherein the image is one of a user interface image, an illumination, or images for visual effects.

15. A method for wireless projection mapping, comprising:
projecting (302), by a wireless projection mapping device (210), an image on a projection surface;
detecting (304), by a sensor (218), a user signal from a user in response to the projected image;
determining (306) a user input from the user based on the detected user signal; and
performing (308) an action based on the user input.

16. The method of claim 15, wherein performing the action includes sending a control signal to a vehicle headunit installed in a vehicle via a wireless modem based on the user input to control at least one of light setting in the vehicle, a seat position of a seat in the vehicle, climate and comfort setting in the vehicle, an in-vehicle communication system, an in-vehicle navigation system, or a vehicle locking/unlocking system, or to provide energy state of charge (SOC) level information of a battery.

17. The method as in any one of claims 15-16, further comprising:
receiving an instruction from the vehicle headunit; and
controlling the wireless projection mapping device to project the image based on the instruction.

18. The method as in any one of claims 15-17, wherein the image is one of a user interface image, an illumination, or images for visual effects.

19. A method implemented by a vehicle headunit installed in a vehicle, comprising:
receiving (402) a control signal wirelessly from a wireless projection mapping device (210); and
controlling (404) a vehicle based on the control signal.

20. The method of claim 19, wherein at least one of light setting in the vehicle, a seat position of any seat in the vehicle, climate and comfort setting in the vehicle, an in-vehicle communication system, an in-vehicle navigation system, or a vehicle locking/unlocking system, or providing energy state of charge (SOC) level information of a battery is controlled based on the control signal from the wireless projection mapping device.

21. The method as in any one of claims 19-20, further comprising:
receiving (406) a user input from an in-vehicle user interface; and
controlling (408) the vehicle based on the user input received from the in-vehicle user interface.

22. The method of claim 21, wherein it is determined whether a user of the wireless projection mapping device (210) is driving the vehicle above a pre-configured autonomous driving level or the vehicle is stopped or parked, and the vehicle is controlled based on a control signal received from the wireless projection mapping device (210) if it is determined that the user of the wireless projection mapping device (210) is driving the vehicle above the pre-configured autonomous driving level or the vehicle is stopped or parked, otherwise the vehicle is controlled based only on the user input from the in-vehicle interface.

23. The method as in any one of claims 19-23, further comprising:
sending an instruction to the wireless projection mapping device to control the wireless projection mapping device to project an image on a projection surface.

24. The method of claim 23, wherein the image is one of a user interface image, an illumination, or images for visual effects.

25. A machine-readable medium including code, when executed, to cause a machine to perform a method as in any one of claims 15-24.
